# FASCICULE DE BREVET EUROPEEN

(11) **EP 2 510 243 B1**
(45) Date de publication et mention de la délivrance du brevet: **31.07.2019**
(21) Numéro de dépôt: 10773918.7
(22) Date de dépôt: 08.11.2010
(51) Int. Cl.: F04D 29/38

(54) **HELICE DE VENTILATEUR, EN PARTICULIER POUR VEHICULE AUTOMOBILE**
LÜFTERVORRICHTUNG, IM BESONDEREN FÜR EIN KRAFTFAHRZEUG
FAN PROPELLER, IN PARTICULAR FOR A MOTOR VEHICLE

(30) Priorité: 07.12.2009 FR 0905893
(43) Date de publication de la demande: 17.10.2012
(73) Titulaire: Valeo Systemes Thermiques, 78320 Le Mesnil Saint Denis (FR)
(72) Inventeur: HENNER, Manuel, F-78310 Auffargis (FR); DEMORY, Bruno, F-95640 Marines (FR)
(74) Mandataire: Metz, Gaëlle
(86) Numéro de dépôt international: PCT/EP2010/067007
(87) Numéro de publication internationale: WO 2011/069762

(56) Documents cités:
- GB-A- 513 863
- US-A- 1 506 937
- US-A- 4 197 057
- US-A- 4 915 588
- US-A- 6 116 856
- US-A1- 2004 227 035

## Description

L'invention se rapporte aux hélices de ventilateur.

Elle concerne plus particulièrement une hélice de ventilateur comprenant un moyeu et des pales s'étendant radialement vers l'extérieur à partir du moyeu, dans laquelle chaque pale possède un profil général, notamment en aile d'avion, avec un bord d'attaque et un bord de fuite, une fibre neutre et une corde entre le bord d'attaque et le bord de fuite.

Une telle hélice peut être utilisée notamment dans les équipements de véhicules automobiles, par exemple dans un groupe moto-ventilateur pour accélérer un flux d'air au travers d'un module de refroidissement comprenant un ou plusieurs échangeurs de chaleur, dont le radiateur de refroidissement du moteur du véhicule.

L'hélice est alors fixée sur un arbre d'un moteur électrique pour être entraînée en rotation.

Les pales de l'hélice s'étendent à partir du moyeu et leurs extrémités extérieures sont libres ou bien réunies par un anneau profilé, appelé aussi « virole ».

Dans l'application particulière à un groupe moto-ventilateur de véhicule automobile, l'hélice doit fonctionner dans une large plage de conditions et doit être capable de produire un débit élevé d'air avec un très faible besoin en énergie.

Pour satisfaire de telles conditions, les hélices sont classiquement équipées d'un faible nombre de pales (typiquement entre 5 et 9), chaque pale ayant une corde de longueur limitée de manière à réduire le couple du ventilateur.

Il en résulte que de nombreux ventilateurs utilisés dans les applications pour automobiles présentent un faible rapport d'espacement géométrique en un rayon donné à partir du centre de l'hélice. Ce rapport, que l'on appelle aussi "solidité", est défini comme la longueur de corde que multiplie le nombre de pales et que divise le périmètre au rayon considéré. Ainsi, ce rapport est d'autant plus élevé que l'hélice comporte plus de pales et que les pales ont une corde plus grande.

Les hélices de ventilateur à faible solidité ont pour inconvénient d'être très sensibles aux conditions de fonctionnement, à la proximité d'autres composants mécaniques et aux phénomènes de recirculation d'air aux extrémités des pales.

Dans des conditions défavorables, l'efficacité globale chute conduisant à de mauvaises conditions de refroidissement et/ou à des besoins plus élevés en énergie pour entraîner le ventilateur à une vitesse de rotation suffisante.

Par ailleurs, dans ces ventilateurs connus, les pales de l'hélice présentent toujours un profil classique en aile d'avion, dans lequel la fibre neutre du profil présente une concavité de même sens.

Les documents US 6 116 856 A et US 4 915 588 A divulguent une pale d'hélice de ventilateur comprenant une fibre neutre présentant un point d'inflexion. Le document GB 513 863 A divulgue une pale d'hélice de ventilateur comprenant une fibre neutre présentant une concavité suivie d'une partie généralement plane dans une région près d'un moyeu.

L'invention a notamment pour but de surmonter les inconvénients précités.

Elle vise en particulier à procurer une hélice de ventilateur susceptible de fonctionner dans une large plage de conditions de fonctionnement en procurant un débit d'écoulement élevé, et cela avec un faible besoin en énergie.

L'invention propose à cet effet, dans un premier mode de réalisation de l'invention, que la pale présente, sur une partie au moins de sa longueur, un profil conformé en forme de S aplati tel que la fibre neutre admette un point d'inflexion et présente deux concavités opposées, à savoir une concavité positive entre le bord d'attaque et le point d'inflexion et une concavité négative entre le point d'inflexion et le bord de fuite.

Ainsi chacune des lames se caractérise par une conformation spécifique du profil, sur une partie au moins de sa longueur, qui permet de maintenir la solidité à une valeur convenable sans augmenter considérablement la traînée et en conséquence le couple du ventilateur.

Ce profil aérodynamique particulier provient du fait que la fibre neutre de celui-ci admet un point d'inflexion, ce qui permet de définir deux courbures successives de sens respectifs opposés.

Grâce à ce profil particulier, on peut réaliser des hélices qui présentent un meilleur comportement et dont le fonctionnement est moins affecté par la chute d'efficacité.

Le point d'inflexion est, selon le premier mode de réalisation de l'invention, situé entre 20% et 80% de la longueur de la corde à compter du bord d'attaque.

On préfère cependant que le point d'inflexion soit situé plus près du bord de fuite que du bord d'attaque.

Selon une autre caractéristique de l'invention, la tangente à la fibre neutre au niveau du point d'inflexion intersecte la corde en formant un angle minimal de 4°, de préférence de 10 à 20°.

Avantageusement, la concavité positive du profil présente une cambrure d'au moins 2% et la concavité négative du profil présente une cambrure d'au moins 2%, la cambrure étant définie comme le rapport entre la hauteur de la fibre neutre par rapport à la corde et la longueur de la corde.

Dans un second mode de réalisation de l'invention, la pale présente sur une partie au moins de sa longueur un profil conformé tel que la fibre neutre présente une concavité positive entre le bord d'attaque et un point intermédiaire et une partie généralement plane entre ce point intermédiaire et le bord de fuite.

Selon le second mode de réalisation de l'invention, la tangente à la fibre neutre, notamment dans la région du point intermédiaire, intersecte la corde en formant un angle d'au moins 4°, ledit angle étant considéré à l'endroit où l'angle entre la tangente à la ligne neutre et la corde est maximal.

Selon une autre caractéristique de l'invention, le point intermédiaire correspond sensiblement à un point d'inflexion de la fibre neutre.

La partie généralement plane présente de préférence une longueur comprise entre 20% et 60% de la longueur de la corde.

Le profil conformé selon la première et la deuxième forme de réalisation de l'invention n'est pas présent sur toute la longueur de la pale, depuis sa racine au niveau du moyeu jusqu'à son extrémité extérieure.

Ainsi, selon le premier et second mode de réalisation de l'invention, la pale présente un profil évolutif qui part dudit profil conformé dans la région de la racine au niveau du moyeu et aboutit à un profil d'aile d'avion, sans point d'inflexion de la fibre neutre, dans la région d'extrémité de la pale.

Selon une autre caractéristique de l'invention, l'hélice de ventilateur présente une solidité qui est d'au moins 0,5. Avantageusement, la solidité diminue depuis la racine des pales au niveau du moyeu en allant vers l'extrémité des pales.

Par exemple, la solidité varie d'environ 0,9 à environ 0,5 depuis la racine des pales jusqu'à l'extrémité des pales.

Dans la description détaillée qui suit, faite seulement à titre d'exemple, on se réfère aux dessins annexés, sur lesquels :
- la figure 1 est une vue en perspective d'une hélice de ventilateur selon l'invention ;
- la figure 2 représente une section transversale développée d'une pale selon une première forme de réalisation de l'invention ;
- la figure 3 est un détail à échelle agrandie de la pale de la figure 2 dans la région du bord d'attaque ;
- la figure 4 est un détail à échelle agrandie de la pale de la figure 2 dans la région du bord de fuite ;
- la figure 5 représente une section transversale aplatie d'une autre pale selon la première forme de réalisation de l'invention, faisant apparaître les cambrures respectives de la concavité positive et de la concavité négative du profil ;
- la figure 6 représente une section transversale développée d'une pale selon une seconde forme de réalisation de l'invention ;
- la figure 7 est une vue partielle en perspective d'une hélice de ventilateur analogue à celle de la figure 1, où sont représentées trois coupes cylindriques d'une pale, respectivement dans une région proche du moyeu, dans une région intermédiaire et dans une région proche de l'anneau de l'hélice ;
- les figures 8A, 8B et 8C montrent respectivement les sections transversales aplaties du profil de pale en correspondance des trois coupes de la figure 7 ;
- la figure 9 montre schématiquement un diagramme d'écoulement d'air entre deux pales d'une hélice de l'art antérieur ; et
- la figure 10 montre schématiquement un diagramme d'écoulement d'air entre deux pales d'une hélice selon l'invention.

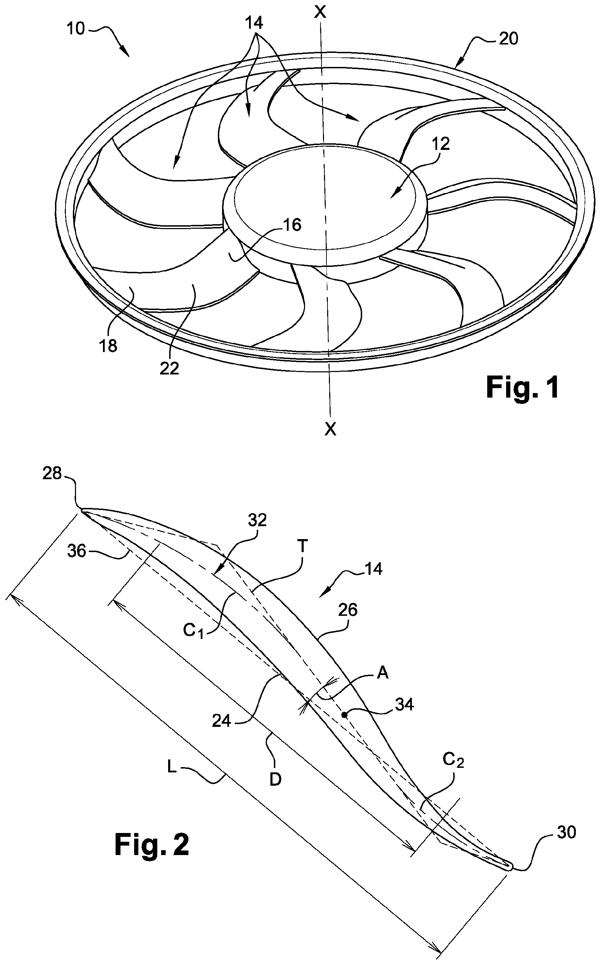

On se réfère d'abord à la figure 1 qui montre une hélice 10 selon l'invention destinée à faire partie, dans l'exemple, d'un groupe moto-ventilateur d'un véhicule automobile. Cette hélice est avantageusement réalisée d'une seule pièce par moulage d'une matière plastique appropriée, par exemple d'un polyamide chargé de fibres ou de billes de verre. L'hélice 10 comprend un moyeu 12, encore appelé "bol", propre à être calé sur un arbre moteur (non représenté) d'un moteur électrique pour être entraîné en rotation autour d'un axe XX suivant un sens de rotation donné.

A partir du moyeu 12 s'étendent radialement une pluralité de pales 14, dans l'exemple au nombre de sept. Ces pales ont une extrémité intérieure 16 (appelée encore "racine" ou "pied") qui se rattache au moyeu 12 et une extrémité extérieure 18 qui est ici reliée à un anneau extérieur 20 (encore appelé "virole"). Toutefois, dans une variante non représentée, les extrémités extérieures 18 des pales peuvent être libres. Entre les extrémités 16 et 18, s'étend une région intermédiaire 22.

Il est fait maintenant référence à la figure 2 qui montre la section transversale aplatie d'une pale 14, c'est-à-dire la courbe fermée plane obtenue en coupant la pale par une surface cylindrique de révolution autour de l'axe XX de l'hélice, et en déroulant à plat cette surface cylindrique. La pale 14 présente un profil conformé ayant la forme d'un S aplati. Ce profil est délimité par une ligne intérieure 24 de forme incurvée et une ligne extérieure 26 de forme incurvée, ces deux lignes se rejoignant en un bord d'attaque 28 et un bord de fuite 30.

Le profil conformé adopte ici une forme caractéristique avec une fibre neutre 32 qui admet un point d'inflexion 34. On rappellera que la fibre neutre correspond à une ligne moyenne qui, en première approximation, se situe à mi-distance de la ligne intérieure 24 et de la ligne extérieure 26 qui délimitent le profil. Du fait de ce point d'inflexion, la fibre neutre 32 présente une inversion de courbure ou de concavité. Elle présente donc deux concavités opposées, à savoir une concavité positive C₁ entre le bord d'attaque 28 et le point d'inflexion 34 et une concavité négative C₂ entre le point d'inflexion 34 et le bord de fuite 30. La fibre neutre 32 s'étend ainsi des deux côtés de la corde 36 qui relie le bord d'attaque 28 et le bord de fuite 30.

Comme on peut le voir sur la figure 2, le point d'inflexion 34 est situé entre 20 % et 80 % de la longueur L de la corde à compter du bord d'attaque. Le domaine D sur lequel se situe le point d'inflexion 34 est matérialisé par un segment fléché sur la figure 2. Généralement, on préfère que le point d'inflexion 34 soit situé plus près du bord de fuite 30 que du bord d'attaque 28, comme c'est le cas sur la figure 2.

La tangente T à la fibre neutre, au niveau du point d'inflexion, intersecte la corde 36 en formant un angle A d'au moins 4°. De préférence, cet angle A sera compris entre 10 et 20°. Plus cet angle sera élevé et plus les concavités C₁ et/ou C₂ seront prononcées.

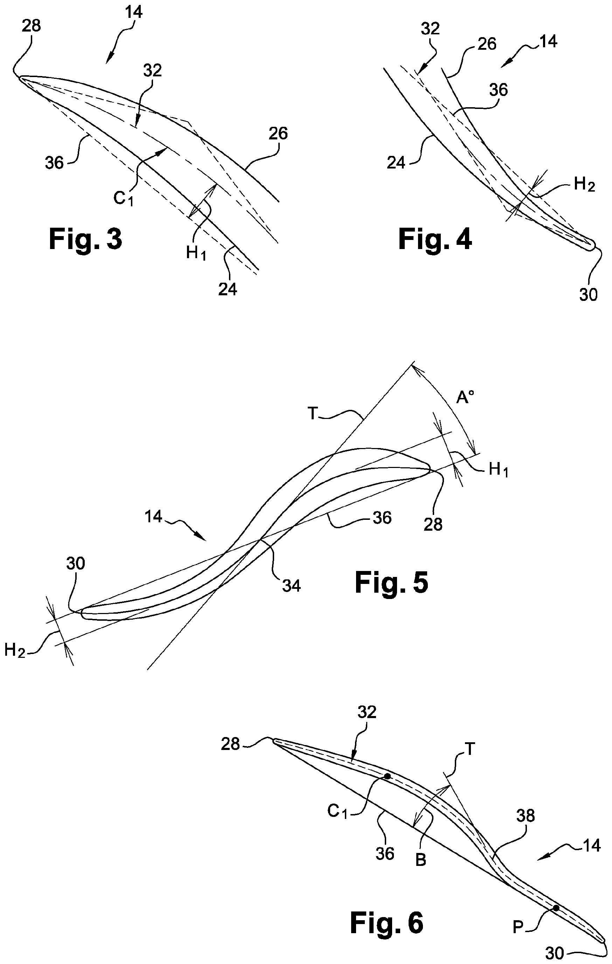

La concavité positive C₁ du profil présente une cambrure d'au moins 2%, la cambrure étant définie comme le rapport entre la hauteur H₁ de la fibre neutre 32 par rapport à la corde 36 et la longueur L de la corde (figure 3). Cette cambrure peut par exemple être comprise entre 4 et 8%.

De même la concavité négative C₂ du profil présente une cambrure d'au moins 2%, la cambrure étant définie comme le rapport entre la hauteur H₂ de la fibre neutre 32 par rapport à la corde 36 et la longueur L de la corde (figure 4). Cette cambrure peut par exemple être comprise entre 4 et 8%.

Dans l'exemple représenté H₁ est supérieur à H₂, d'où il résulte que la cambrure de la concavité C₁ est plus élevée que la cambrure de la concavité C₂.

La figure 5 montre un autre profil d'une pale analogue à celle de la figure 2 où les hauteurs H₁ et H₂ ainsi que l'angle A sont indiqués.

La figure 6 représente la section transversale aplatie d'une pale 14 selon un second mode de réalisation de l'invention qui montre un autre profil de pale qui s'apparente à celui de la première forme de réalisation précitée. Ici, la pale présente sur une partie au moins de sa longueur un profil conformé tel que la fibre neutre 32 présente une concavité positive C₁ entre le bord d'attaque 28 et un point intermédiaire 38 et une partie généralement plane P entre ce point intermédiaire 38 et le bord de fuite 30.

De façon caractéristique, la tangente T à la fibre neutre dans la région du point intermédiaire 38 intersecte la corde 36 en formant un angle B d'au moins 4°. Cet angle B est considéré à l'endroit où l'angle entre la tangente à la ligne neutre et la corde est maximal. Il est de préférence compris entre 10 et 20°, par exemple 8° et 12°.

Le point intermédiaire 38 correspond sensiblement à un point d'inflexion de la fibre neutre 32, situé à la jonction de la concavité positive C₁ et de la partie généralement plane P.

La partie généralement plane P présente une longueur l généralement comprise entre 10 et 80%, notamment entre 20% et 60%, de la longueur L de la corde 36. Dans l'exemple de la figure 6 la longueur l correspond sensiblement à un tiers de la longueur L. Le point intermédiaire 38 est donc situé, dans l'exemple, plus près du bord de fuite 30 que du bord d'attaque 28.

Le profil conformé selon un exemple ne faisant pas partie de l'invention peut être présent sur toute la longueur de la pale, ou bien selon le premier et le second mode de réalisation de l'invention, sur une partie seulement de cette longueur. Selon l'invention, la pale présente un profil conformé évolutif depuis la région de la racine de la pale au niveau du moyeu jusqu'à la région d'extrémité de la pale.

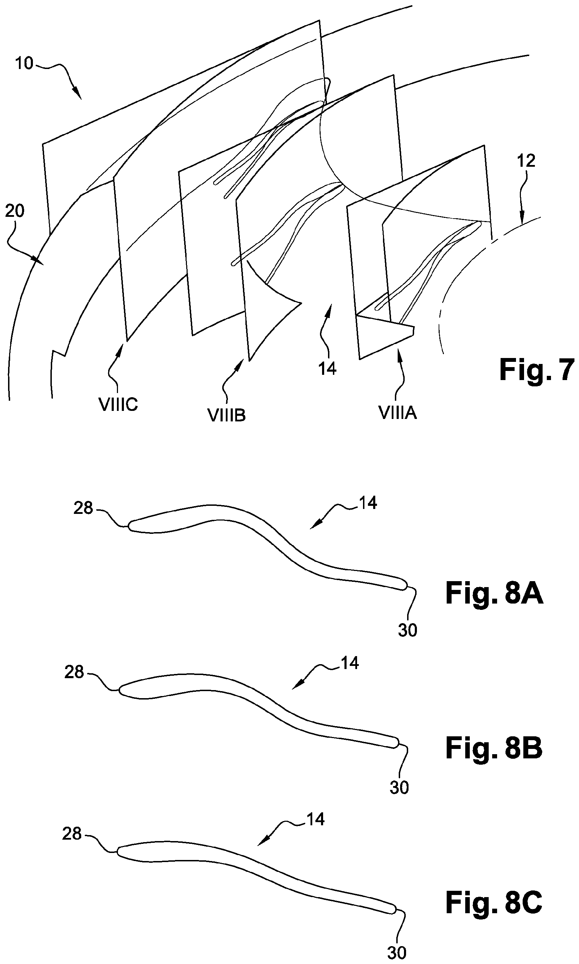

On se réfère maintenant aux figures 7 et 8A, 8B et 8C pour décrire un exemple de profil évolutif dans le cas du premier mode de réalisation de l'invention. La figure 7 est une vue partielle d'une hélice dont l'une des pales est coupée en trois endroits par des coupes cylindriques VIIIA, VIIIB et VIIIC, respectivement dans la région de la racine près du moyeu, dans une région intermédiaire et dans une région près de l'extrémité extérieure près de l'anneau.

Les figures 8A, 8B et 8C sont les sections transversales développées correspondantes. Elles montrent les variations du profil depuis la région de l'extrémité intérieure 16 (racine) jusqu'à la région de l'extrémité extérieure 18, en passant par la région intermédiaire 22 (figure 8B). On voit que le profil est beaucoup plus cambré dans la région de la racine (figure 8A) que dans la région extérieure (figure 8C) en passant par une transition (Figure 8B).

Selon d'autres exemples ne faisant pas partie de l'invention, d'autres profils de pale sont possibles du moment que le profil conformé (dans l'exemple en forme de S aplati) soit présent sur une partie au moins de la longueur de la pale. Selon l'invention ainsi qu'elle est définie dans les revendications attachées, le profil passe progressivement d'une forme spécifique selon le premier ou le deuxième mode de réalisation de l'invention jusqu'à une forme classique en aile d'avion, sans inversion de courbure et sans point d'inflexion.

Dans le premier mode de réalisation la concavité positive se prolonge par une concavité négative, alors que dans le second mode de réalisation la concavité positive se prolonge par une partie généralement plane. Dans les deux cas la concavité positive comporte un prolongement (concavité négative ou partie généralement plane) qui s'étend jusqu'au bord de fuite et qui influe sur l'écoulement du fluide mis en mouvement par l'hélice.

On expliquera maintenant le fonctionnement d'une hélice selon l'invention par comparaison avec une hélice de l'art antérieur.

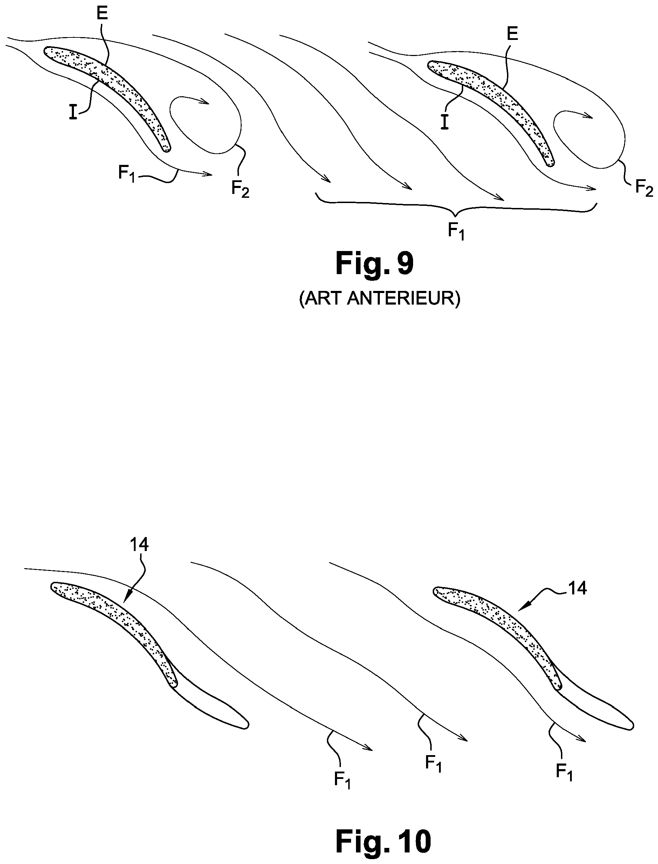

Il est fait d'abord référence à la figure 9 qui montre schématiquement les lignes d'écoulement d'air d'une hélice de l'art antérieur dont les pales ont un profil classique en aile d'avion, et dont la solidité (comme définie plus haut) est faible.

Comme l'explique la théorie d'Euler, pour les turbomachines, l'élévation de la pression est une fonction de la déviation de l'écoulement le long de la corde de la pale. De nombreux profils aérodynamiques ont été utilisés pour obtenir une telle déviation. Un meilleur guidage est obtenu avec une solidité élevée, c'est-à-dire avec des pales proches les unes des autres.

Par contre, dans le cas d'une faible solidité, le guidage de l'écoulement est moins efficace et on obtient des séparations d'écoulement du côté du bord d'attaque, comme le montre le schéma de la figure 9. On voit sur ce schéma que les écoulements d'air ont tendance à se séparer et à former des turbulences du côté de l'extrados E (flèches F₂), alors que ces écoulements d'air sont bien guidés du côté de l'intrados I (flèches F₁).

La solution classique pour éviter la formation de ces turbulences est d'augmenter la solidité, soit avec des cordes plus longues pour des profils classiques, soit avec plus de pales, ce qui augmente le couple du ventilateur. Toutefois, une telle solution n'est pas toujours compatible avec les contraintes techniques des moteurs électriques à courant continu utilisés dans les moto-ventilateurs des véhicules automobiles.

L'invention permet d'éviter de tels inconvénients grâce à l'utilisation d'un profil tel que défini précédemment.

La figure 10 montre que, du fait du profil conformé de l'invention (dans l'exemple en forme de S aplati), les lignes d'écoulement d'air F₁ restent attachées, sans se séparer ni créer de turbulences comme dans le cas de la figure 9. Ces lignes sont ainsi guidées et serrées entre les pales 14. Le même résultat peut être obtenu avec un profil conformé selon le second mode de réalisation de l'invention.

Dans le cas de l'invention, la solidité est avantageusement d'au moins 0,5 et elle peut varier d'environ 0,9 à environ 0,5 depuis la racine des pales jusqu'à l'extrémité des pales. A titre de comparaison, pour une pale classique, cette solidité varie d'environ 0,7 à la racine jusqu'à 0,3 à l'extrémité. Ainsi, avec une solidité plus élevée, mais avec un profil conformé selon la première ou la deuxième forme de réalisation de l'invention, on obtient de meilleures performances sans générer de turbulences ou autres perturbations, et cela sans nécessiter un couple plus élevé.

L'invention trouve une application préférentielle aux groupes moto-ventilateurs des véhicules automobiles.

## Revendications

1. Hélice de ventilateur d'un véhicule automobile comprenant un moyeu (12) et des pales (14) s'étendant radialement vers l'extérieur à partir du moyeu (12), dans laquelle chaque pale (14) possède un profil avec une fibre neutre (32) et une corde (36) s'étendant entre un bord d'attaque (28) et un bord de fuite (30) de ladite pale (14), la pale (14) présentant sur une partie au moins de sa longueur un profil conformé en forme de S aplati tel que la fibre neutre (32) admette un point d'inflexion (34) et présente deux concavités opposées, à savoir une concavité positive (C₁) entre le bord d'attaque (28) et le point d'inflexion (34) et une concavité négative (C₂) entre le point d'inflexion (34) et le bord de fuite (30), le point d'inflexion (34) étant situé entre 20 % et 80% d'une longueur (L) de la corde (36) à compter du bord d'attaque (28), **caractérisée en ce que** la pale (14) présente un profil évolutif qui part dudit profil conformé dans une région au niveau du moyeu (12) et aboutit à un profil d'aile d'avion, sans point d'inflexion de la fibre neutre, dans une région d'extrémité de la pale.

2. Hélice de ventilateur selon la revendication 1, **caractérisée en ce que** le point d'inflexion (34) est situé plus près du bord de fuite (30) que du bord d'attaque (28).

3. Hélice de ventilateur selon l'une des revendications 1 ou 2, **caractérisée en ce qu'**une tangente (T) à la fibre neutre au niveau du point d'inflexion intersecte la corde en formant un angle (A) d'au moins 4°.

4. Hélice de ventilateur selon l'une des revendications 1 à 3, **caractérisée en ce que** la concavité positive (C₁) du profil présente une cambrure d'au moins 2%, la cambrure étant définie comme le rapport entre une hauteur (H₁) de la fibre neutre (32) par rapport à la corde (36) et la longueur (L) de la corde.

5. Hélice de ventilateur selon l'une des revendications 1 à 4, **caractérisée en ce que** la concavité négative (C₂) du profil présente une cambrure d'au moins 2%, la cambrure étant définie comme le rapport entre une hauteur (H₂) de la fibre neutre (32) par rapport à la corde (36) et la longueur (L) de la corde.

6. Hélice de ventilateur d'un véhicule automobile comprenant un moyeu (12) et des pales (14) s'étendant radialement vers l'extérieur à partir du moyeu (12), dans laquelle chaque pale (14) possède un profil avec une fibre neutre (32) et une corde (36) s'étendant entre un bord d'attaque (28) et un bord de fuite (30) de ladite pale (14), la pale (14) présentant sur une partie au moins de sa longueur un profil conformé tel que la fibre neutre (32) présente une concavité positive (C₁) entre le bord d'attaque (28) et un point intermédiaire (38) et une partie généralement plane (P) entre ce point intermédiaire (38) et le bord de fuite (30), une tangente (T) à la fibre neutre intersectant la corde (36) en formant un angle (B) d'au moins 4°, ledit angle étant considéré à l'endroit où l'angle entre la tangente à la fibre neutre et la corde est maximal, **caractérisée en ce que** la pale (14) présente un profil évolutif qui part dudit profil conformé dans une région au niveau du moyeu (12) et aboutit à un profil d'aile d'avion, sans point d'inflexion de la fibre neutre, dans une région d'extrémité de la pale.

7. Hélice de ventilateur selon la revendication 6, **caractérisée en ce que** l'angle (B) est compris entre 8°et 12°.

8. Hélice de ventilateur selon l'une des revendications 6 ou 7, **caractérisée en ce que** le point intermédiaire (38) correspond sensiblement à un point d'inflexion de la fibre neutre (32).

9. Hélice de ventilateur selon l'une des revendications 6 à 8, **caractérisée en ce que** la partie généralement plane (P) présente une longueur (I) comprise entre 20% et 60% d'une longueur (L) de la corde (32).

10. Hélice de ventilateur selon l'une des revendications 1 à 9, **caractérisée en ce qu'**elle présente une solidité d'au moins 0,5, la solidité étant définie comme la longueur de corde (L) de la pale (14) que multiplie un nombre de pales et que divise un périmètre en un rayon donné.

11. Hélice de ventilateur selon la revendication 10, **caractérisée en ce que** la solidité diminue depuis une racine des pales au niveau du moyeu en allant vers l'extrémité des pales.

12. Hélice de ventilateur selon la revendication 11, **caractérisée en ce que** la solidité varie d'environ 0,9 à environ 0,5 depuis la racine des pales à l'extrémité des pales.

## Patentansprüche

1. Lüfterrad eines Kraftfahrzeugs, umfassend eine Nabe (12) und Blätter (14), die sich von der Nabe (12) aus radial nach außen erstrecken, wobei jedes Blatt (14) ein Profil mit einer neutralen Faser (32) und einer Sehne (36) besitzt, die sich zwischen einer Anströmkante (28) und einer Abströmkante (30) des Blatts (14) erstrecken, wobei das Blatt (14) über mindestens einen Teil seiner Länge ein in Form eines abgeflachten S ausgebildetes Profil derart aufweist, dass die neutrale Faser (32) einen Wendepunkt (34) und zwei entgegengesetzte Konkavitäten aufweist, und zwar eine positive Konkavität (C1) zwischen der Anströmkante (28) und dem Wendepunkt (34) und eine negative Konkavität (C₂) zwischen dem Wendepunkt (34) und der Abströmkante (30), wobei der Wendepunkt (34) zwischen 20 % und 80 % einer Länge (L) der Sehne (36), ab der Anströmkante (28) gerechnet, liegt, **dadurch gekennzeichnet, dass** das Blatt (14) ein evolutives Profil aufweist, das bei dem in einer Region an der Nabe (12) ausgebildeten Profil beginnt und in einem Flugzeugflügelprofil, ohne Wendepunkt der neutralen Faser, in einer Endregion des Blatts endet.

2. Lüfterrad nach Anspruch 1, **dadurch gekennzeichnet, dass** der Wendepunkt (34) näher an der Abströmkante (30) als an der Anströmkante (28) liegt.

3. Lüfterrad nach einem der Ansprüche 1 oder 2, **dadurch gekennzeichnet, dass** eine Tangente (T) an der neutralen Faser am Wendepunkt die Sehne in einem Winkel (A) von mindestens 4° schneidet.

4. Lüfterrad nach einem der Ansprüche 1 bis 3, **dadurch gekennzeichnet, dass** die positive Konkavität (C₁) des Profils eine Wölbung von mindestens 2 % aufweist, wobei die Wölbung als das Verhältnis zwischen einer Höhe (H₁) der neutralen Faser (32) in Bezug auf die Sehne (36) und der Länge (L) der Sehne definiert ist.

5. Lüfterrad nach einem der Ansprüche 1 bis 4, **dadurch gekennzeichnet, dass** die negative Konkavität (C₂) des Profils eine Wölbung von mindestens 2 % aufweist, wobei die Wölbung als das Verhältnis zwischen einer Höhe (H₂) der neutralen Faser (32) in Bezug auf die Sehne (36) und der Länge (L) der Sehne definiert ist.

6. Lüfterrad eines Kraftfahrzeugs, umfassend eine Nabe (12) und Blätter (14), die sich von der Nabe (12) aus radial nach außen erstrecken, wobei jedes Blatt (14) ein Profil mit einer neutralen Faser (32) und einer Sehne (36) besitzt, die sich zwischen einer Anströmkante (28) und einer Abströmkante (30) des Blatts (14) erstrecken, wobei das Blatt (14) über mindestens einen Teil seiner Länge ein Profil aufweist, das derart ausgebildet ist, dass die neutrale Faser (32) eine positive Konkavität (C₁) zwischen der Anströmkante (28) und einem Zwischenpunkt (38) und einen im Allgemeinen ebenen Teil (P) zwischen diesem Zwischenpunkt (38) und der Abströmkante (30) aufweist, wobei eine Tangente (T) an der neutralen Faser die Sehne (36) in einem Winkel (B) von mindestens 4° schneidet, wobei der Winkel an der Stelle betrachtet wird, an welcher der Winkel zwischen der Tangente an der neutralen Faser und der Sehne am größten ist, **dadurch gekennzeichnet, dass** das Blatt (14) ein evolutives Profil aufweist, das bei dem in einer Region an der Nabe (12) ausgebildeten Profil beginnt und in einem Flugzeugflügelprofil, ohne Wendepunkt der neutralen Faser, in einer Endregion des Blatts endet.

7. Lüfterrad nach Anspruch 6, **dadurch gekennzeichnet, dass** der Winkel (B) zwischen 8° und 12° beträgt.

8. Lüfterrad nach einem der Ansprüche 6 oder 7, **dadurch gekennzeichnet, dass** der Zwischenpunkt (38) im Wesentlichen einem Wendepunkt der neutralen Faser (32) entspricht.

9. Lüfterrad nach einem der Ansprüche 6 bis 8, **dadurch gekennzeichnet, dass** der im Allgemeinen ebene Teil (P) eine Länge (l) zwischen 20 % und 60 % einer Länge (L) der Sehne (32) aufweist.

10. Lüfterrad nach einem der Ansprüche 1 bis 9, **dadurch gekennzeichnet, dass** es eine Solidität von mindestens 0,5 aufweist, wobei die Solidität definiert ist als die Sehnenlänge (L) des Blatts (14), die mit der Anzahl der Blättern multipliziert wird und durch einen Kreisumfang in einen gegebenen Radius dividiert wird.

11. Lüfterrad nach Anspruch 10, **dadurch gekennzeichnet, dass** die Solidität von einer Wurzel der Blätter an der Nabe aus zum Ende der Blätter hin abnimmt.

12. Lüfterrad nach Anspruch 11, **dadurch gekennzeichnet, dass** die Solidität von etwa 0,9 bis etwa 0,5 von der Wurzel der Blätter aus bis zum Ende der Blätter variiert.

## Claims

1. Motor vehicle fan propeller comprising a hub (12) and blades (14) which extend radially towards the exterior from the hub (12), wherein each blade (14) has a profile with a neutral axis (32) and a span (36) which extends between a leading edge (28) and a trailing edge (30) of said blade (14),
the blade (14) having, on at least part of its length, a profile formed in the shape of a flattened S, such that the neutral axis (32) makes possible a point of contraflexure (34), and has two opposite concavities, i.e. a positive concavity (C₁) between the leading edge (28) and the point of contraflexure (34), and a negative concavity (C₂) between the point of contraflexure (34) and the trailing edge (30), the point of contraflexure (34) being situated at between 20% and 80% of a length (L) of the span (36), starting from the leading edge (28), **characterized in that**
the blade (14) has a developing profile which starts from said shaped profile in a region at the level of the hub (12), and ends in a profile of the aircraft wing type, without a point of contraflexure of the neutral axis, in an end region of the blade.

2. Fan propeller according to Claim 1, **characterized in that** the point of contraflexure (34) is situated closer to the trailing edge (30) than to the leading edge (28).

3. Fan propeller according to either of Claims 1 and 2, **characterized in that** a tangent (T) to the neutral axis at the level of the point of contraflexure intersects the span and forms an angle (A) of at least 4°.

4. Fan propeller according to one of Claims 1 to 3, **characterized in that** the positive concavity (C₁) of the profile has a camber of at least 2%, the camber being defined as the ratio between a height (H₁) of the neutral axis (32) relative to the span (36) and the length (L) of the span.

5. Fan propeller according to one of Claims 1 to 4, **characterized in that** the negative concavity (C₂) of the profile has a camber of at least 2%, the camber being defined as the ratio between a height (H₂) of the neutral axis (32) relative to the span (36) and the length (L) of the span.

6. Motor vehicle fan propeller comprising a hub (12) and blades (14) which extend radially towards the exterior from the hub (12), wherein each blade (14) has a profile with a neutral axis (32) and a span (36) which extends between a leading edge (28) and a trailing edge (30) of said blade (14),
the blade (14) having, on at least part of its length, a profile shaped such that the neutral axis (32) has positive concavity (C₁) between the leading edge (28) and an intermediate point (38), and a generally flat part (P) between this intermediate point (38) and the trailing edge (30), a tangent (T) to the neutral axis intersecting the span (36) and forming an angle (B) of at least 4°, said angle being considered in the location where the angle between the tangent to the neutral axis and the span is maximal, **characterized in that**
the blade (14) has a developing profile which starts from said shaped profile in a region at the level of the hub (12), and ends in a profile of the aircraft wing type, without a point of contraflexure of the neutral axis, in an end region of the blade.

7. Fan propeller according to Claim 6, **characterized in that** the angle (B) is between 8° and 12°.

8. Fan propeller according to either of Claims 6 and 7, **characterized in that** the intermediate point (38) corresponds substantially to a point of contraflexure of the neutral axis (32).

9. Fan propeller according to one of Claims 6 to 8, **characterized in that** the generally flat part (P) has a length (1) of between 20% and 60% of a length (L) of the span (32).

10. Fan propeller according to one of Claims 1 to 9, **characterized in that** it has solidity which is at least 0.5, the solidity being defined as the length of span (L) of the blade (14) multiplied by a number of blades and divided by a perimeter in a given radius.

11. Fan propeller according to Claim 10, **characterized in that** the solidity decreases from a root of the blades at the level of the hub, going towards the end of the blades.

12. Fan propeller according to Claim 11, **characterized in that** the solidity varies from approximately 0.9 to approximately 0.5 from the root of the blades to the end of the blades.
